# EUROPEAN PATENT APPLICATION

(11) **EP 0 665 510 A1**
(43) Date of publication of application: **02.08.1995**
(21) Application number: 94101112.4
(22) Date of filing: 26.01.1994
(51) Int. Cl.: G06K 19/06

(54) **Two dimensional code sheet for processing data**

(71) Applicant: TOMIOKA, Makoto, Chiba 272 (JP); Matsuda, Masayuki, Kokubunji-shi, Tokyo 185 (JP)
(72) Inventor: TOMIOKA, Makoto, Chiba 272 (JP); Matsuda, Masayuki, Kokubunji-shi, Tokyo 185 (JP)
(74) Representative: Graf, Walter, Dipl.-Ing.

(57) **Abstract**

To propose a multi-purpose two dimensional code sheet which is capable of processing a large quantity of data with high speed and high accuracy, a plurality of mark sheet type negative and positive codes are arranged in a matrix-like arrangement within a mark zone of a sheet.

Each code mark makes either a positive type or negative type binary code. Data codes are provided with address code, start code, end code, line feed code, page feed code, position code in relation to the desired functions. Further, rule codes such as language code and bit number code are provided for a translation code of other data codes.

The data sheet code is capable of displaying multi dimensional data, of sensing codes data in an optimum position not only for image as a whole but for partial image data, and of processing data automatically with high speed and accuracy.

## Description

### DETAILED DESCRIPTION OF THE INVENTION

### [0001] Field of Industrial Use

The technology herein disclosed belongs to the technological field which deals with code systems as used in POS systems or FA(factory automation) systems for stock managements.

### [0002] Prior Art

As is well known, our society owes ,for its prosperity much to the highly advanced industry. Civil society as well as industrial society is supported by the advanced science and technology. Today's society is supported by informations rather than materials or energy and highly advanced computor-oriented information processing systems spreads into manyfacturers , deliverers and civil society. Further development of these system is demanded. Research and development as well as practical use is getting momentum.

### [0003]

Production, circulation as well as transportation of products have become information-oriented and have grown up to networks.

### [0004]

In product circulation systems, which affect the civil life directly, the so called POS system has been so commonly used to secure a stable supply, safe consumptions that information codes are used in various places such as supermarkets,department stores to great benefit of social life.

### [0005]

Thus, the code system as is seen in so-called bar codes enables us to process data with accuracy and speed surpassing human ability. The system has been used not only for the management of product circulation, or stockage, but also in the production management as in said FA systems.

### [0006]

As more and more research and developement have been made on various types of automatic reading and managing systems for the man-machine interface, in which binary code data are scanned by means of an optical scanner and processed by a computor, many drawbacks have been found on the widely used bar code systems.

### [0007]

The bar code data is given by one-dimensional bar marks and limited in data volume even if it is given in multi line marks written in two dimensional plane. It also requires very high printing techniques which leads to a higher cost. It also has limitations on the area where the bar mark is applied. As face sensing is not available, the two dimensional bar code system is not employed in FA systems. Although JAN code is qualified as automatic reading technique,it is hardly introduced in the production systems.

### [0008] Objectives of Present Invention

As compared with one dimensional bar code system which comprises bars combined with space therebetween, two dimensional code systems has its advantages, with its direct input capability by means of face-sensing with CCD cameras, and connectability with the data processing computor.Therefore, the two dimensiona system draws more and more attention. For example, inventions as in USP4,939,354, UKP 1,249,545, Patent Publication 2-12579, Patent Publication before examination 57-191788, Patent Publication2-268382, Patent Publication2-268383. The character display system with 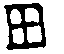 -pattern codes proposed by the same inventor,so called CALRA code system, has been put in practical use.

### [0009]

Other two dimensional matrix code systems now in use at low cost are being proposed.

### [0010]

The matrix type of two dimensional code heretofore developed aims mainly at processing larger quantity of data by improving density.

On the other hand, the code is not suited for automatic reading and managing of informations on images as a whole nor for processing unit images by means of, for instance, CCD cameras in an optimum state; that is , the system has the drawbacks that there is no clear differentiation between image data processing and whole image processing in the process. Therefore data as scanned in spots are not processed in relation with the whole image by merely enlarging the spotted images; and it has also the drawbacks that it lacks the indexing function such as additional functional data, and that check digit function must be provided.

### [0011]

Therefore, such matrix type of two dimensional code is not put into wide range of practical use for introduction of said FA systems as well as for its standerdization because of the drawbacks above.

### [0012] Objective of Invention

The objective of present invention is on one side to overcome the drawbacks which above mentioned two dimensional matrix code has and on the other side, to overcome the drawbacks that one dimensional bar code according to the prior art above has, enabling sensing in two dimension, scanning matrix data arranged in rows and lines by using the automatic recognition thechnique hitherto developed, regardless of the positions of works to be conveyed or to be worked, nor of the position image either in the whole or in a spot, which can be provided with the check digit function, can handle large volume of data, can be provided with a functional code for handling data from external data sources, thus making available an Ultimate interface language, and multi-language potential whereby providing a two dimensional code sheet which can be used in data processing technology used in various industries.

### [0013] Means for Achieving the Objectives and Functions

In order to achieve the objectives, present invention as set forth in the claims above,coomprises two dimensional code sheet which is to be placed on a surface of a work, in the column of which, unit blocks of codes of fixed size are arranged in rows, lines or in matrices, written by thermoprinting means. Each unit blocks has several code marks, such as black pattern or negative pattern, white pattern or positive pattern, or mixed pattern, regularly arranged in mark sheet as printed or projected mark. Unit block may be comprised of marks in a line or in a row.
The code mark of a unit block includes a start code at its top, an end code and a line feed code at its end, and other data codes therebetween. Between the lines can be inserted functional codes taken from another data list, i.e. code for bit number, character code, alphabet,chinese character, mathematical equations, control data, data communication codes.
As an automatic sensing means for the unit block, a CCD camera is used for scanning, whereby the position of the mark scanned in the matrix is known by the position code regardless of whether the entire matrix is scanned or part of the matrix is scanned, thus enabling scanning from the start code.

### [0014] Embodiment

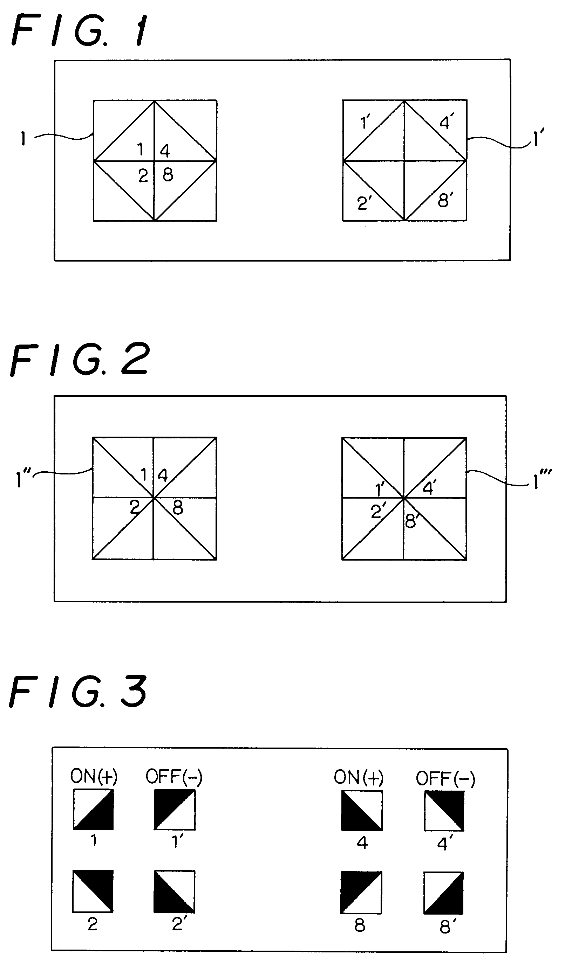

Now, an embodiment of present invention is described hereinafter with reference to the Figs.1 to 3.

### [0015]

The embodiment as shown in Fig. 1 is an example of mark sheet type code mark which is the core of present invention

The mark consists of four squares, each of which is devided into two triangles, and these triangles are made dark (negative area) or blank area(positive area) by high sensitive thermoprinting means, thus forming a binary code mark capable of expressing numerals 1,2,4,8 or a geometric series.
As shown in Fig. 2, another diagonal lines may be drawn to make another embodiment 1',1''.
As shown in Fig.3, various combination of positive and negative areas are possible for on-or off-pattern.

### [0016]

In another code type, printed area or dark area may be positive or negative and white area negative or positive, which area designates as positive or negative can be selected according to the benefit of users.

### [0017]

As described above, a positive-negative code mark corresponds to a binary code, and is shown as matrix in Figs.4 and 5, in which the combinations of upper and lower marks are shown at the bottom. Fig.6,7 shows similar combinations but upper positives and lower negatives are shown in the same colour.

### [0018]

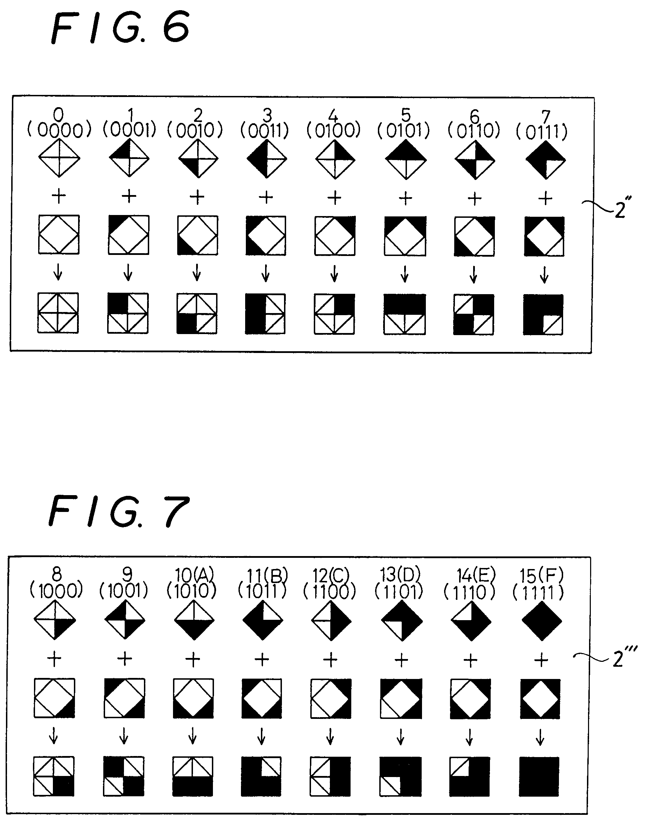

The mark at the bottom left of Fig.6 and the one at right bottom are all white and all black respectively, and the former is used with four corner in black, the latter in white at centralportion.

### [0019]

It goes without saying that the data code express matrix elements, such as character mark, design, alphabet, Greek character,German character, Chinese character, Hiragana,Katakana(Japanese alphabet), Korean character, Arabic numerals, as well as braille, stenographic character. Morse code, bar code,OCR, sheet mark. These data codes use the code mark proposed in present invention.

### [0020]

Furthermore, the peripheral positive-negative parts can be combined with the core area in several angular positions. The peripheral portion as well as the core portions has four display area,which can be used as check digit codesand therefore no check digitis required.

### [0021]

The explanation above is shown in Table 1.

### [0022] Table 1.

The display codes of present invention are arranged in a matrix including a single lined codes, to form a unit block,the systematic classification of which is shown in Table 2.

### [0023] Table 2

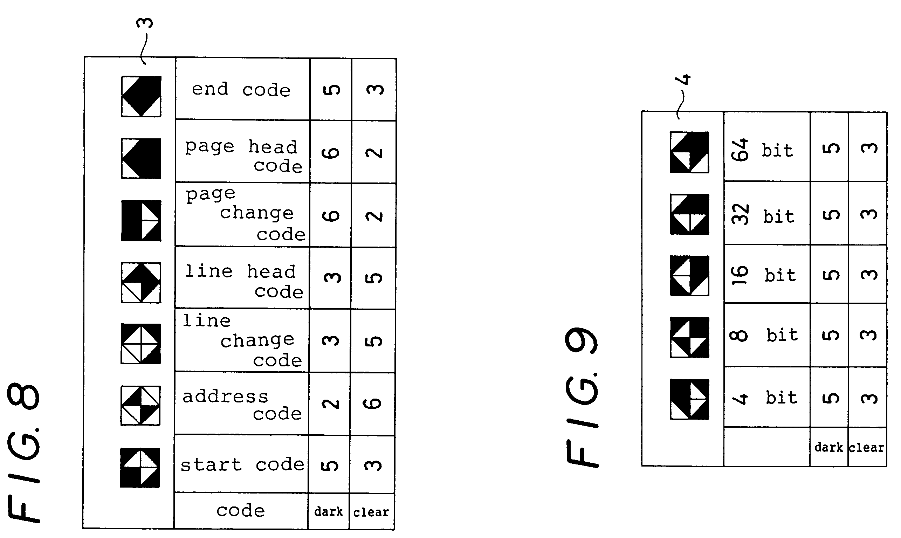

In case of partial sensing by means of a sensing device such as CCD camera, the unit blocks contained in the area now unde scanning is not used to find out the location of the matrix in relation to the whole image. For this purpose, various codes are prepared, such as an address code for indicating addresses necessary for heading , retrieving or ending of informations; a start code for indicating the start location of the matrix; first page code for indicating the first page or first section of a plurality of page or section of display codes; line feed code placed at the end of a line for indicating "feed the line"; end code for indicating the end or terminals of the matrix display codes;indication code placed at the head of a matrix; page code for indicating the page in the case when the data codes are displayed on a several pages,and territory code placed on the marginal area of code display for indicating the area. These codes are expressed in positive-negative patterns(3) as shown in Fig.8.

### [0024]

The positive-negative patterns are not restricted to the embodiment shown above, but other patterns,e.g. reversed combination of positive and negative area are possible.

### [0025]

In order to direct the kind of order or structure, a group of rule codes are interpolated, such as bit structure indication code, for indicating bit number e.g.4,8,16,32,64 or block number; protect code for directing translation of data code through rotation,combination or transfer of the data to secure accuracy of informations; language code for disignating kind of languages used such as alphabet, chinese character,Kana letters,numerals, marks, signs or machine language such as programming language, assembly language,or special language such as braille,stenograph,the Morse code; command code for directing functions such as insertion or deletion; character code for directing functional formula,translation, grammer, communication language or language shift; shift code for directing interpolation of tables,functions formula, equation; address volume code for indicating total number of address volume codes to be placed in a matrix, page volume code for indicating the data volume in terms of page or volume when the data extends to several pages or sections; data sheet retrieval code for directing rules for retrieving data sheet number or data sheet addresses; interrupt code placed before the rule code to change the rule code into another; interrupt cancel code to cancel the rule code and return to the former rule code; original order code for directing specific purpose such as postal code, carriage numbers. As an example of these rule, bit code as shown in Fig.9 is placed in a desired position of a matrix.

### [0026]

In order to build up data, bit codes , such as basic characters, patterns marks,or codes, are used. These data codes include character code for numerals, names of country, or racial characters, machine code such as bar code, OCR patterns, for a machine-readable code(exp JIS-X0201), Kanji codes; mark codes assigned to each multi bit figure or character for processing data; special language code used in braille, stenography or Morse code; and other original codes which are proposed after the present invention.

### [0027]

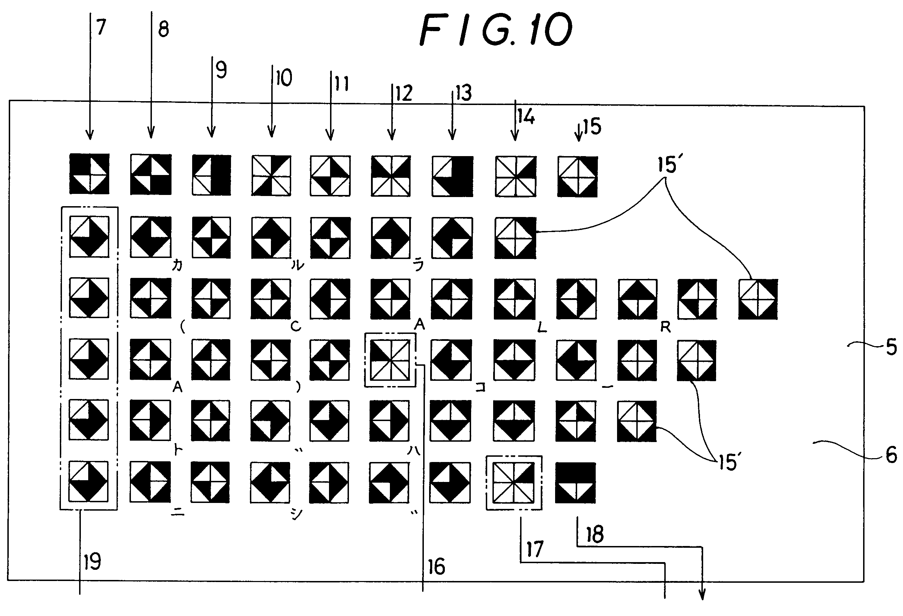

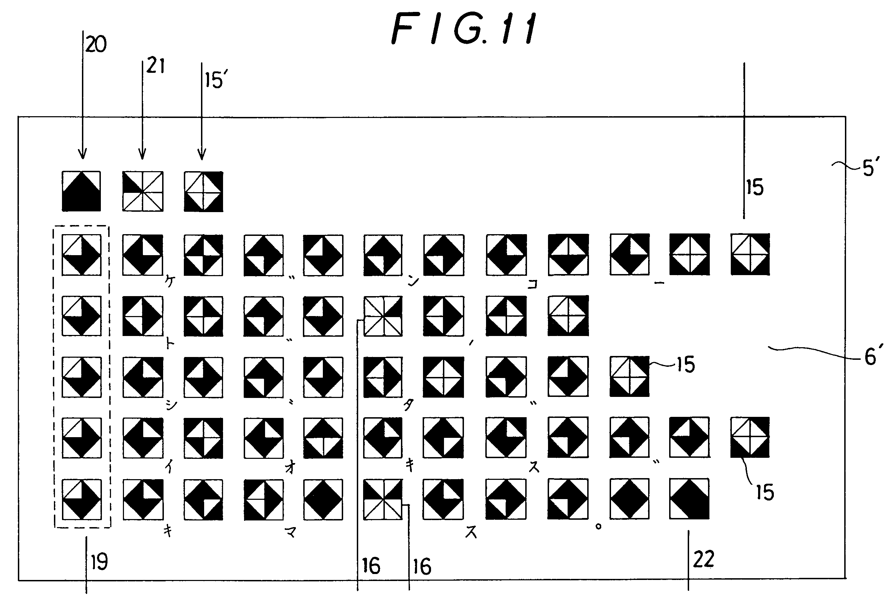

Referring now to Figs.10 and 11, an ordinary embodiment using the group codes mentioned above will be described in which the message "CALRA code will found the era of 2 dimensional code" is written .On two sheets of code marks (two pages) of matrix display type are shown in a series of codes in the zone 6,6' of an unit block.
On the first sheet5, a start code 7 as well as a position code; a bit type indication code 8(in this embodimment 8-bit), language code 19, language number code 10, address code 11, address volume code 12(in this embodiment 3), page code 15, and page volume code, and at the end of each line a line feed code 15' and at the head of each line, a head code19, and at a middle point, an address code 16.

### [0028]

At the end of the series of code of the first code sheet 5, a code 17 indicating "to be continued on the next page" and a page feed code 18 are placed.

### [0029]

On the next page,i.e. the second code sheet 5', the following codes are placed; namely, head code 20, line feed code 15' next to the code 21,and at the next line a line head code 19 and at the line end , an end code 22.

### [0030]

It is obvious that the embodiment of present invention is not restricted to the one shown above. In another feature of the invention, it is possible to use the snake code as data code, or to lay up line of code like a building block.

### [0032]

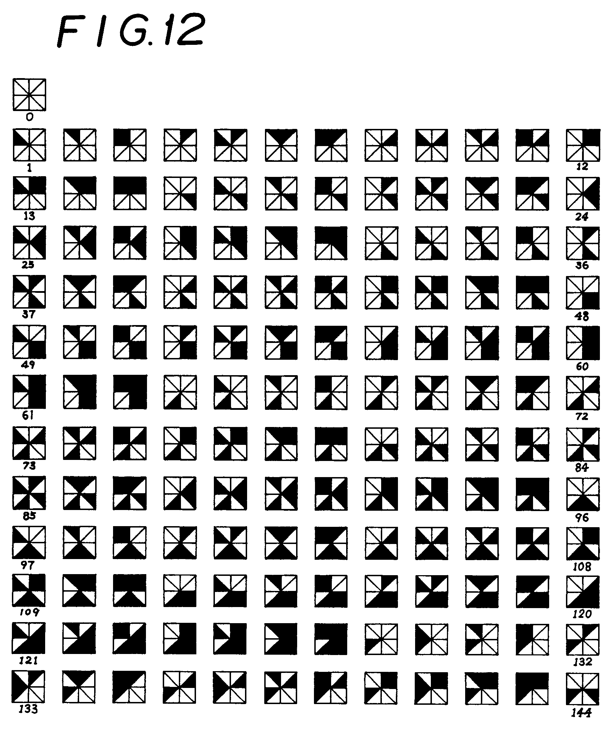

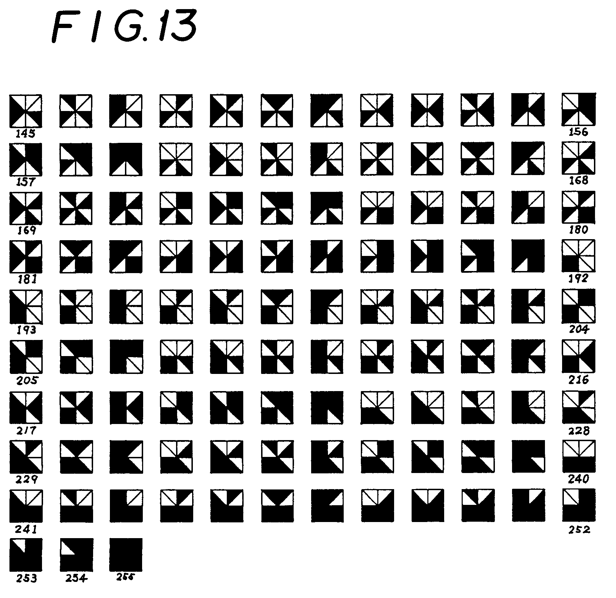

It is also obvious that the feature as shown in Figs.12,13 can be proposed by changing the design with respect to the positive-negative patterns.

### [0033] Advantage of the Invention

According the present invention, the matrix type two dimensional code is applicable not only to the conventional POS system, but also to a FA system, requires no high precision printing technique, is capable of covering misreading of worn out codes resulting from a long time use by neighbouring normal codes, has a high reading accuracy, and has an intelligent functions that automatic sensing is possible regarding to quality, kinds, destinations of goods, allowing a spot sensing, or oblique sensing position or sensing of goods which are moving on a conveyor.

### [0034]

It is also possible to read functional data from an external source. Because of its check digit fuction, it realizes an efficacious data processing and a standardization in a FA system.

### [0035]

By putting a position code,e.g.address code ,start code, end code line feed code,or rule code for directing a conversion to another sheet at the head or end of each line or row of a matrix-like code arrangement, multiple data processing of a large quantity of data is possible.

### [0036]

Another advantage of present invention is that it allows to interpolate data from other sources by putting data code responding to a rule code and that it allows to process data from partially sensed codes and that it allows to make data with high density and accuracy.

### [0037]

The two dimensional code of present invention is applicable not only to industrial goods or distributed goods but also to information cards, data processing tapes or disks, or floppy disks thus realizing wide range of use.

### Brief Description of Drawings

- Figure 1: is a plan view of an example of code mark according to the invention.
- Figure 2: is a plan view of another embodiment
- Figure 3: is a plan view of code marks having different positive-negative patterns.

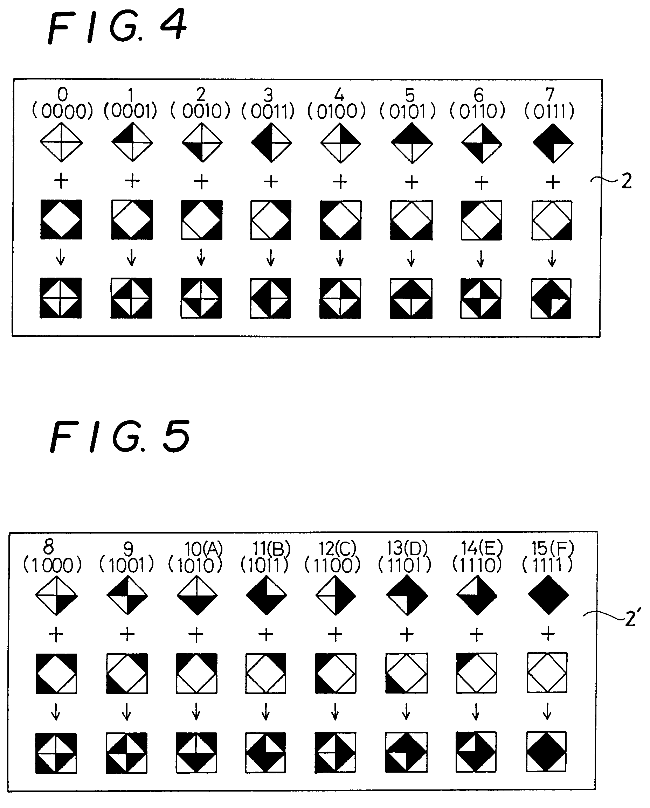

- Figure 4: is a plan view of code marks which shows a basic combination mode.
- Figure 5: is a plan view of code marks continued from Fig.4
- Figure 6: shows another embodiment of code marks shown in Fig.4.
- Figure 7: shows another embodiment as shown in Fig.5
- Figure 8: shows various positive codes.
- Figure 9: shows various rule codes.
- Figure 10: shows the first page of a matrix code.
- Figure 11: shows the second page of matrix code.
- Figure 12: shows another embodiment of matrix type code arrangement.

### Explanation of Numerals

- 5: code sheet
- 6: unit block(mark zone)
- 7: start code
- 22: end code
- 15: line feed code
- 16: address code
- 8: rule code

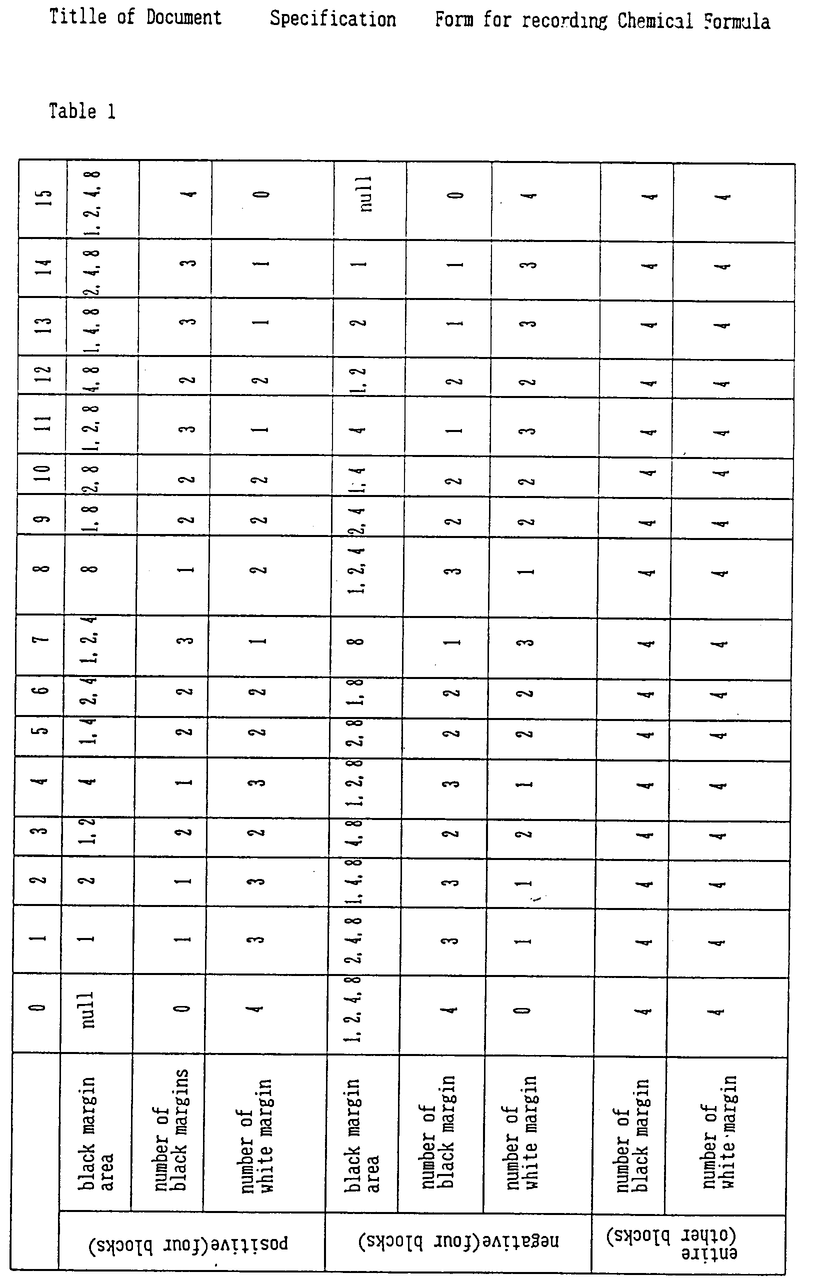

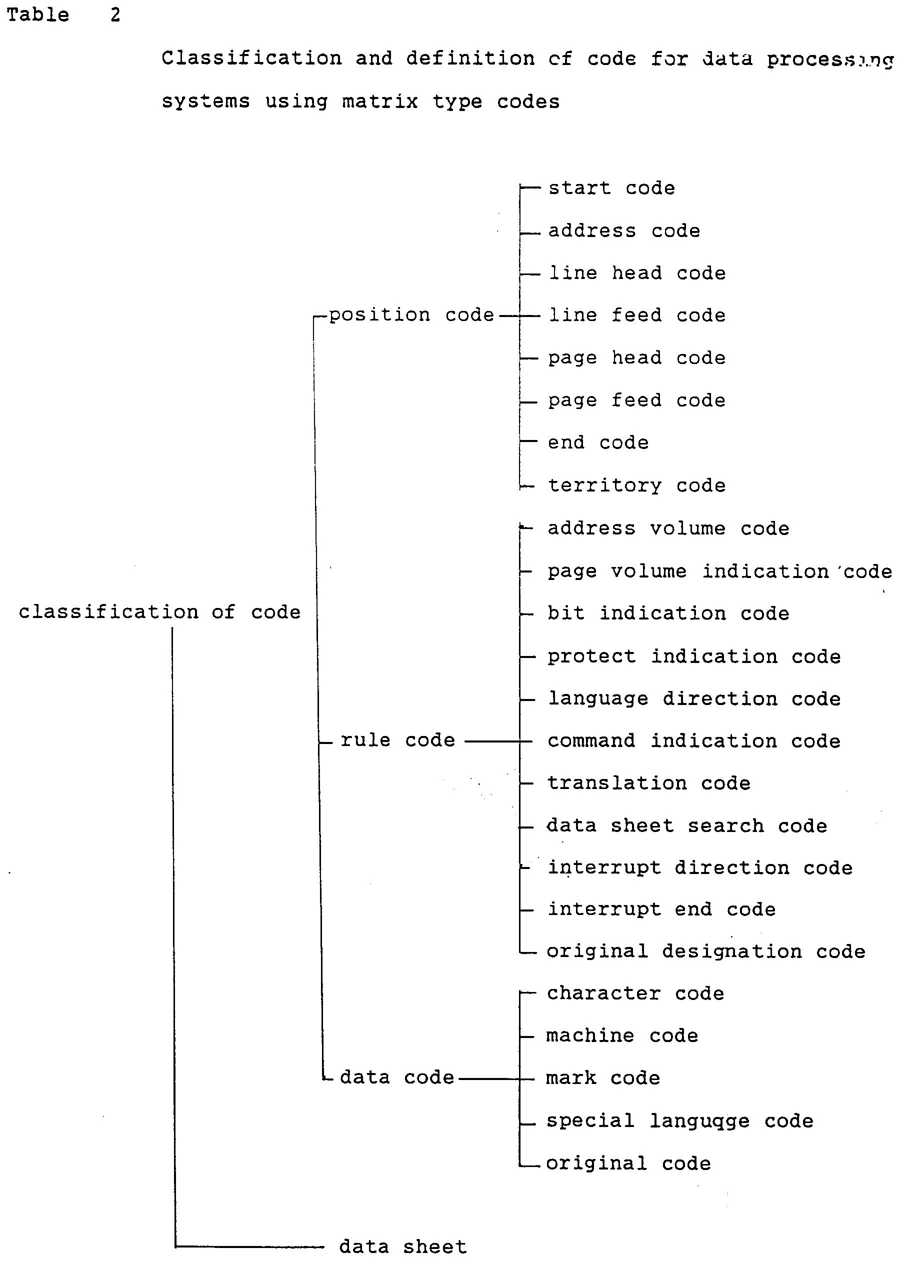

## Claims

1. Two dimensional code for processing data, in which a plurality of unit blocks of code mark comprising positive and negative patterns are arranged in a mark zone of fixed size, in a matrix-like arrangement, characterized in that each line or row of code marks of the matrix has at least one position code which includes address code, start code, end code, and line feed code.

2. Two dimensional code as set forth in claims 1 in which said unit blocks of code marks is comprised of only positive marks of solid color.

3. Two dimensional code as set forth in claim 1 in which said unit blocks of code marks is comprised of only positive marks of solid color.

4. Two dimensional code as set forth in claim 1 in which said unit blocks of code marks is comprised of only negative marks of color(s).

5. Two dimensional code according to one of the preceding claims characterized in that each line or row of code marks of the matrix has a rule code.

6. Two dimensional code for processing data as set forth in claim 5 in which said rule code is a translation code for translating an interpolating code which is not contained in said code.

7. Two dimensional code for processing data as set forth in claim 5 in which said rule code is a function code for directing kinds of commands.

8. Two dimensional code for processing data, as set forth in claim 5 in which said rule code is a bit direction code.

9. Two dimensional code for processing data as set forth in claim 5 in which said rule code is a protect direction code.

10. Two dimensional code sheet for processing data, characterized in that each line or row of the code marks are coded according to one or more of the preceding claims 1 to 9.
